# FASCICULE DE BREVET EUROPEEN

(11) **EP 2 729 976 B1**
(45) Date de publication et mention de la délivrance du brevet: **30.09.2015**
(21) Numéro de dépôt: 12744025.3
(22) Date de dépôt: 05.07.2012
(51) Int. Cl.: H01M 2/02, H01M 2/08, H01M 6/18, H01M 6/40, H01M 10/04, H01M 10/0525, H01M 2/24, H01M 2/26, H01M 10/052, H01M 10/058, H01M 6/02

(54) **ACCUMULATEUR ÉLECTRIQUE ET SES MOYENS D'ENCAPSULATION**
ELEKTRISCHE BATTERIE UND VORRICHTUNG FÜR IHRE VERKAPSELUNG
ELECTRIC BATTERY AND MEANS FOR ENCAPSULATING SAME

(30) Priorité: 08.07.2011 FR 1102160
(43) Date de publication de la demande: 14.05.2014
(73) Titulaire: Commissariat à l'Énergie Atomique et aux Énergies Alternatives, 75015 Paris (FR)
(72) Inventeur: DELEPIERRE, Gabriel, F-38600 Fontaine (FR); BEDJAOUI, Messaoud, F-38340 Voreppe (FR)
(74) Mandataire: Talbot, Alexandre
(86) Numéro de dépôt international: PCT/FR2012/000267
(87) Numéro de publication internationale: WO 2013/007889

(56) Documents cités:
- EP-A1- 2 315 294
- WO-A2-2005/067645
- FR-A1- 2 874 128
- US-A1- 2007 037 060

## Description

### Domaine technique de l'invention

L'invention est relative à un accumulateur électrique comportant une micro-batterie munie de premier et second collecteurs de courant et des moyens d'encapsulation comportant une couche hermétique, électriquement isolante, constituée par une matrice en matériau polymère comprenant des particules électriquement conductrices.

L'invention est également relative à un procédé de fabrication d'un tel accumulateur électrique.

### État de la technique

Plusieurs solutions d'encapsulation d'une micro-batterie, notamment au lithium, ont été proposées dans la littérature. Ces solutions peuvent être réparties en deux familles : l'encapsulation en couches minces et l'encapsulation par élément rapporté.

Les solutions d'encapsulation en couches minces consistent à recouvrir la micro-batterie d'au moins une couche mince. Les couches minces peuvent être à base de différents matériaux ayant des caractéristiques électriques, thermomécaniques et chimiques compatibles avec les composants et le fonctionnement de la micro-batterie. À titre d'exemple, la demande de brevet internationale WO-2005/038957 divulgue une encapsulation d'une micro-batterie par une bicouche céramique/métal déposée directement sur les composants de la micro-batterie. Bien qu'un matériau céramique soit chimiquement stable et constitue généralement un isolant électrique efficace, sa fragilité mécanique est un handicap majeur pour l'adoption de ce mode d'encapsulation.

D'autres combinaisons de matériaux ont été expérimentées afin de former une encapsulation en multicouches, en particulier, comprenant une couche en matériau polymère, déposée directement sur les composants de la micro-batterie. Les matériaux polymères sont, d'un point de vue structurel, intéressants puisqu'ils permettent de limiter les défauts liés à la rugosité du substrat et d'absorber les déformations des composants de la micro-batterie lors de son utilisation. Par ailleurs, la couche en matériau polymère peut avantageusement comporter des particules métalliques, formant une partie du collecteur de courant de la micro-batterie. Toutefois, les matériaux polymères sont perméables à certains contaminants qui peuvent réagir avec les parties actives de la micro-batterie. De ce fait, l'encapsulation en multicouches comportant un matériau polymère nécessite également la présence d'une couche additionnelle constituant un bouclier efficace contre les contaminants.

À titre d'exemple, la demande de brevet WO-2005/067645 décrit une encapsulation en multicouches constituée par un empilement d'au moins une couche en polymère recouverte par une couche métallique. Le procédé de fabrication d'une telle encapsulation requiert néanmoins une multiplication d'étapes technologiques qui induit des coûts et un temps de production élevés. La protection latérale de la micro-batterie reste peu fiable vis-à-vis des contaminants comme l'air et l'humidité.

Les solutions d'encapsulation par élément rapporté consistent à coller un capot, par exemple réalisé en verre ou encore en matériau polymère laminé. Ce type d'encapsulation constitue une protection efficace des micro-batteries au lithium. Cependant, le capot de protection est généralement épais par rapport à l'épaisseur totale de la micro-batterie. Le système d'encapsulation par élément rapporté présente un encombrement supérieur pour une capacité surfacique constante par rapport aux solutions d'encapsulation par couches minces. EP 2 315 294 décrit une microbatterie comportant une couche d'encapsulation conductrice et FR 2 874 128 décrit une microbatterie comportant des plots de connexion.

### Objet de l'invention

Dans certaines applications, notamment dans le domaine de l'électronique, il existe un besoin de fournir un accumulateur électrique facile à réaliser, étanche et ayant des propriétés mécaniques améliorées.

On tend à satisfaire ce besoin en prévoyant un accumulateur électrique selon la revendication 1 comportant une micro-batterie munie de premier et second collecteurs de courant et des moyens d'encapsulation comportant une couche hermétique, électriquement isolante et constituée par une matrice en matériau polymère comprenant des particules électriquement conductrices. L'accumulateur électrique comporte des premier et second plots de connexion en matériau électriquement conducteur qui sont, respectivement, connectés électriquement aux premier et second collecteurs de courant de la micro-batterie. Les moyens d'encapsulation comportent également une micro-batterie additionnelle munie de premier et second collecteurs de courant, la micro-batterie additionnelle étant disposée en regard et séparée de la micro-batterie par la couche hermétique. Les premier et/ou second collecteurs de courant de la micro-batterie additionnelle sont électriquement connectés, respectivement, aux premier et/ou second plots de connexion via au moins une partie des particules électriquement conductrices.

On prévoit également un procédé de fabrication d'un tel accumulateur électrique selon la revendication 9 comportant l'encapsulation de la micro-batterie en disposant en regard et en pressant la micro-batterie additionnelle munie des premier et second collecteurs de courant avec la micro-batterie qui est préalablement munie des premier et second plots de connexion et recouverte par la couche hermétique. Le pressage est réalisé jusqu'à obtenir la connexion électrique entre les premier et/ou second plots de connexion et, respectivement, les premier et/ou second collecteurs de courant de la micro-batterie additionnelle via une partie des particules électriquement conductrices.

### Description sommaire des dessins

D'autres avantages et caractéristiques ressortiront plus clairement de la description qui va suivre de modes particuliers de réalisation de l'invention donnés à titre d'exemples non-limitatifs et représentés aux dessins annexés, dans lesquels :
- la figure 1 représente, schématiquement et en coupe, un accumulateur électrique selon un premier mode de réalisation particulier de l'invention ;
- la figure 2 représente, schématiquement et en coupe, un accumulateur électrique selon un deuxième mode de réalisation particulier de l'invention ;
- la figure 3 représente, schématiquement et en perspective, une vue partielle d'un accumulateur électrique selon un autre mode de réalisation de l'invention ;
- les figures 4 à 9, représentent, schématiquement et en coupe, des étapes successives d'un procédé de fabrication d'un accumulateur électrique selon un mode de réalisation particulier de l'invention.

### Description de modes particuliers de réalisation

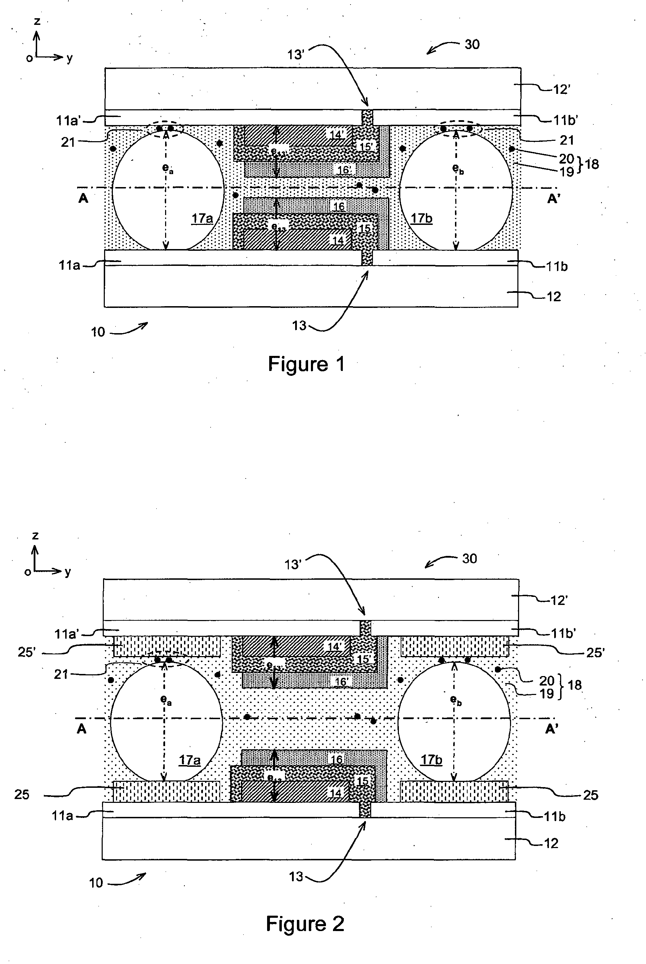

Selon un mode de réalisation particulier, représenté à la figure 1, un accumulateur électrique comporte une micro-batterie 10 munie de premier 11 a et second 11 b collecteurs de courant, disposés sur un substrat 12. Les premier 11 a et second 11 b collecteurs de courant sont en matériau électriquement conducteur, par exemple, en titane ou en tungstène. Les premier 11 a et second 11 b collecteurs de courant se présentent sous forme de couches coplanaires ayant respectivement une épaisseur d'environ 250 nm. Le substrat 12 peut être classiquement en silicium, en silicium nitruré ou encore en verre.

Comme représenté à la figure 1, la micro-batterie 10 comporte également un empilement 13 de couches minces solides formant les parties électrochimiquement actives de la micro-batterie 10. L'empilement 13 est constitué par des première 14 et seconde 16 électrodes séparées par un électrolyte 15.

La première électrode 14 peut être agencée de manière à recouvrir partiellement et uniquement un des premier 11 a ou second 11 b collecteurs de courant de la micro-batterie 10, par exemple, le premier collecteur 11a. La première électrode 14 peut être une cathode et le premier collecteur de courant 11 a un collecteur de courant cathodique. La première électrode 14 a, de préférence, une épaisseur de 1,5 µm. La première électrode 14 est, par exemple, formée par un matériau choisi parmi l'oxysulfure de titane (TiOS), le pentoxyde de vanadium (V₂O₅) et le disulfure de titane (TiS₂).

Comme représenté à la figure 1, l'électrolyte 15 est disposé de manière à recouvrir une partie du collecteur de courant 11 a, une partie du second collecteur de courant 11 b, la totalité de la première électrode 14 et la partie libre du substrat 12 disposée entre les premier 11 a et second 11 b collecteurs de courant. L'électrolyte solide 15 peut être en matériau électriquement isolant ayant une forte conductivité ionique, par exemple, en oxynitrure de lithium et de phosphore (LiPON).

La seconde électrode 16 peut être agencée de manière à recouvrir une majeure partie de l'électrolyte solide 15 et à être en contact avec le second collecteur de courant 11 b. La seconde électrode 16 peut être une anode et le second collecteur de courant 11 b un collecteur de courant anodique. En particulier, la seconde électrode est à base d'un composé lithié. Avantageusement, la seconde électrode 16 a une épaisseur de l'ordre de 3 µm.

Des premier 17a et second 17b plots de connexion en matériau électriquement conducteur sont respectivement connectés électriquement aux premier 11 a et second 11b collecteurs de courant de la micro-batterie 10.

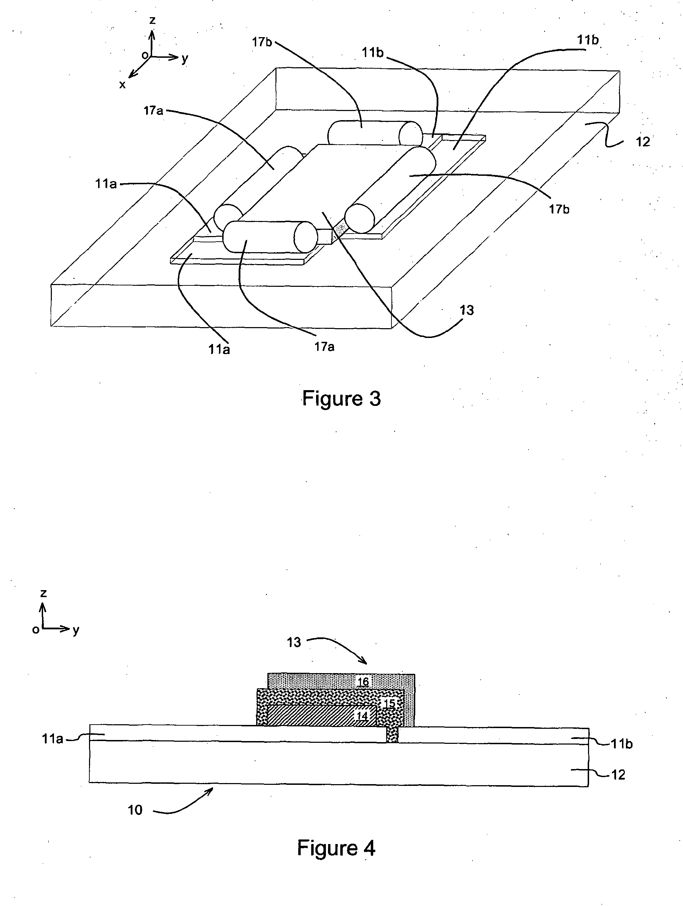

Selon le mode de réalisation particulier représenté à la figure 1, les premier 17a et second 17b plots de connexion sont, respectivement, disposés sur les premier 11 a et second 11b collecteurs de courant de la micro-batterie 10. Les premier 17a et second 17b plots de connexion peuvent avoir différentes formes géométriques, par exemple une forme sphérique. Les premier 17a et second 17b plots de connexion sont, avantageusement, en or et présentent la forme d'un cylindre de révolution couché dont les deux bases appartiennent au plan (yoz). De préférence, les premier 17a et second 17b plots de connexion sont identiques et présentent la forme d'un cylindre couché. Le diamètre du cylindre correspond à l'épaisseur des premier 17a et second 17b plots de connexion et est, de préférence, compris entre 6 et 150 µm (figure 3).

L'accumulateur électrique comprend également des moyens d'encapsulation comportant une couche hermétique 18 électriquement isolante. La couche hermétique 18 est constituée par une matrice 19 en matériau polymère, de préférence, électriquement isolant comprenant des particules électriquement conductrices 20.

Les moyens d'encapsulation comportent également une micro-batterie additionnelle 30, munie d'éléments semblables à ceux décrits pour la micro-batterie 10. En particulier, la micro-batterie additionnelle 30 comporte des premier 11a' et second 11b' collecteurs de courant disposés sur une face d'un substrat 12' pourvue des premier 11a' et second 11 b' collecteurs de courant. De la même manière que pour la micro-batterie 10, un empilement 13' de couches minces solides est disposé sur la face du substrat 12'. L'empilement 13' comporte un électrolyte 15' interposé entre des première 14' et seconde 16' électrodes qui sont en contact, respectivement, avec les premier 11a' et second 11b' collecteurs de courant. Les éléments constitutifs des empilements 13 et 13' peuvent être identiques ou différents.

Comme représenté à la figure 1, la micro-batterie additionnelle 30 est disposée en regard et séparée de la micro-batterie 10 par la couche hermétique 18. Les premier 17a et second 17b plots de connexion sont recouverts par la couche hermétique 18 de manière à être complètement noyés dans cette couche. De préférence, la matrice 19 est une matrice adhésive en polymère souple, par exemple de type époxy/acrylate. Les particules électriquement conductrices 20 ont, par exemple, une forme sphérique d'un diamètre d. Les particules 20 peuvent être formées par des sphères en verre recouvertes d'argent. Avantageusement, les particules électriquement conductrices 20 ont une densité p dans la matrice 19 inférieure à 1/d³ et supérieure à 0. De préférence, la couche hermétique 18 est une couche en matériau conducteur anisotrope notée ACF (en anglais « Anisotropic Conductive Film »), par exemple une couche ACF 3M 7371 commercialisé par la société 3M.

Les premier 11a' et/ou second 11b' collecteurs de courant de la micro-batterie additionnelle 30 sont électriquement connectés, respectivement, aux premier 17a et/ou second 17b plots de connexion via au moins une partie 21 des particules électriquement conductrices 20. Autrement dit, au moins un des premier 11a' et second 11 b' collecteurs de courant est électriquement connecté à l'un des premier 17a et second 17b plots de connexion. En effet, la matrice 19 comporte une partie 21 des particules électriquement conductrices 20, agencés de manière à assurer une connexion électrique entre les premier 11 a' et/ou second 11 b' collecteurs de courant de la micro-batterie additionnelle 30 et, respectivement, les premier 17a et/ou second 17b plots de connexion. Les autres particules électriquement conductrices 20 sont dispersées dans la matrice 19, de préférence, de manière à ne pas être en contact avec les éléments de la micro-batterie 10 et de la micro-batterie additionnelle 30.

Ainsi, la réalisation de l'accumulateur électrique selon l'invention permet, avantageusement, de réaliser une micro-batterie 10 efficacement encapsulée par l'intermédiaire d'une micro-batterie additionnelle 30. Les deux micro-batteries étant disposées en regard, chaque micro-batterie constitue une protection pour l'autre micro-batterie, en particulier, grâce aux substrats, 12 et 12', qui forment des barrières épaisses protectrices, sur le dessus et le dessous de l'accumulateur électrique. De plus, la micro-batterie 10 et la micro-batterie additionnelle 30 sont, avantageusement, connectées électriquement entre elles. Cette disposition astucieuse permet ainsi de simplifier la réalisation de l'accumulateur électrique, d'améliorer l'encapsulation des micro-batteries et de réduire les temps et coût de fabrication.

Comme représenté à la figure 1, les premier 11a et second 11 b collecteurs de courant de la micro-batterie 10 sont, avantageusement, symétriques des premier 11a' et second 11b' collecteurs de courant de la micro-batterie additionnelle 30 par rapport à un plan de symétrie AA' disposé entre la micro-batterie 10 et la micro-batterie additionnelle 30. De préférence, la micro-batterie additionnelle 30 est symétrique de la micro-batterie 10 par rapport au plan AA' qui est parallèle aux surfaces des substrats 12 et 12' comportant, respectivement, les empilements 13 et 13'. Une telle symétrie permet avantageusement de faciliter l'alignement et la connexion électrique de la micro-batterie 10 et de la micro-batterie additionnelle 30 et ainsi optimiser le temps de fabrication du dispositif.

La micro-batterie 10 peut être électriquement connectée à la micro-batterie additionnelle 30 suivant une configuration parallèle. Autrement dit, les premiers collecteurs de courant 11 a et 11a', respectivement de la micro-batterie 10 et de la micro-batterie additionnelle 30 sont de même polarité. De manière analogue, les seconds collecteurs de courant 11 b et 11 b', respectivement, de la micro-batterie 10 et de la micro-batterie additionnelle 30 sont de même polarité. Suivant cette configuration, les premier 11a' et second 11 b' collecteurs de courant de la micro-batterie additionnelle 30 sont électriquement connectés, respectivement, aux premier 17a et second 17b plots de connexion via au moins une partie 21 des particules électriquement conductrices 20.

Par polarité d'un collecteur de courant, on entend la polarité ou le type de l'électrode de la micro-batterie avec laquelle il est en contact. Si cette électrode est positive, le collecteur de courant est dit collecteur de courant cathodique (ou de polarité positive) et si l'électrode est négative le collecteur connecté à cette électrode est dit collecteur de courant anodique (ou de polarité négative).

Le fait de relier électriquement en parallèle la micro-batterie 10 et la micro-batterie additionnelle 30 permet, avantageusement, de réaliser un accumulateur électrique étanche et ayant une capacité surfacique augmentée. En effet, la capacité surfacique de l'accumulateur est équivalente, suivant cette configuration, à la somme des capacités surfaciques de la micro-batterie 10 et de la micro-batterie additionnelle 30.

Selon une variante, la micro-batterie 10 peut être électriquement connectée à la micro-batterie additionnelle 30 suivant une configuration en série. Autrement dit, les premiers collecteurs de courant, 11a et 11a', respectivement de la micro-batterie 10 et de la micro-batterie additionnelle 30 sont de polarités différentes. De manière analogue, les seconds collecteurs de courant, 11b et 11b', respectivement de la micro-batterie 10 et de la micro-batterie additionnelle 30 sont de polarités différentes. Cependant, il faudra veiller à ne pas connecter l'un des premier 17a et second 17b plots de connexion afin de ne pas mettre les deux micro-batteries 10 et 30 en court-circuit. Afin de réaliser cette disposition, une couche en un matériau électriquement isolant peut être interposée, par exemple, entre la partie 21 des particules électriquement conductrices 20 et respectivement un des premier 11a' ou second 11b' collecteurs de courant de la micro-batterie additionnelle 30. Suivant cette configuration, uniquement un des premier 11a' et second 11b' collecteurs de courant de la micro-batterie additionnelle 30 est électriquement connecté à un des premier 17a et second 17b plots de connexion via au moins une partie 21 des particules électriquement conductrices 20.

Ainsi, l'accumulateur électrique comportant la micro-batterie 10 et la micro-batterie additionnelle 30 reliées électriquement en série, permet avantageusement de moduler la tension de sortie de l'accumulateur électrique.

Comme représenté à la figure 1, les premier 17a et second 17b plots de connexion ont, avantageusement, des épaisseurs eₐ et e_{b} supérieures à l'épaisseur e₁₃ de l'empilement 13. L'épaisseur e₁₃ représente l'épaisseur de la partie de l'empilement 13 qui est en saillie par rapport au premier collecteur de courant 11a. Par épaisseur d'un plot de connexion, on entend la plus grande dimension du plot de connexion suivant l'axe (oz). De préférence, les épaisseurs eₐ et e_{b} sont au moins deux fois plus grandes que l'épaisseur e₁₃ de l'empilement 13. Les épaisseurs eₐ et e_{b} sont également choisies en fonction des dimensions des différents éléments des deux micro-batteries, 10 et 30, de manière à éviter tout contact possible entre les empilements, 13 et 13'.

Selon un mode particulier de réalisation représenté à la figure 2, l'accumulateur électrique comporte, avantageusement, au moins une couche d'accroche 25 interposée entre le premier 17a ou second 17b plots de connexion et, respectivement, le premier 11a ou second 11 b collecteurs de courant de la micro-batterie 10. Avantageusement, l'accumulateur électrique comporte également au moins une couche d'accroche 25' interposée entre la partie 21 des particules électriquement conductrices 20 et respectivement un des premier 11a' ou second 11 b' collecteurs de courant de la micro-batterie additionnelle 30. De préférence, les couches d'accroche, 25 et 25', sont indépendamment réalisées en aluminium, en cuivre ou en or. Les couches d'accroche, 25 et 25', ont chacune une épaisseur comprise entre 250 nm et 1000 nm. Les couches d'accroches, 25 et 25', permettent d'améliorer l'adhérence des premier 17a ou second 17b plots de connexion. Les épaisseurs, eₐ et e_{b}, respectivement des premier 17a et second 17b plots de connexion sont choisies de manière à obtenir des reliefs des premiers 17a et second 17b plots de connexion supérieurs à celui de l'empilement 13. On ajuste ainsi les épaisseurs, eₐ et e_{b}, afin d'éviter tout contact possible entre les empilements 13 et 13' et d'obtenir des reliefs constituant des barrières se dressant face aux parois latérales de l'empilement 13 et dépassant la seconde électrode 16.

Selon un mode de réalisation particulier représenté à la figure 3, les premier 17a et second 17b plots de connexion délimitent latéralement l'empilement 13 de la micro-batterie 10. En particulier, chaque plot de connexion 17a et 17b peut être constitué d'au moins deux éléments cylindriques en matériau conducteur, de manière à fournir autant d'élément cylindrique que de parois latérales de l'empilement 13. Un tel agencement des premier 17a et second 17b plots de connexion permet, avantageusement, de protéger latéralement l'empilement 13. Suivant la combinaison de ce mode particulier de réalisation avec le précédent mode, c'est l'ensemble des premier 17a et second 17b plots de connexion et la ou les couches d'accroche 25 qui forment la protection latérale de l'empilement 13. Autrement dit, suivant ce mode particulier de réalisation, la couche d'accroche 25 et les premier 17a et second 17b plots de connexion délimitent latéralement l'empilement 13.

Ce qui permet également d'assurer une protection latérale de l'empilement 13' (non représenté à la figure 3) de la micro-batterie additionnelle 30, disposé en regard de l'empilement 13. De plus, cet agencement des premier 17a et second 17b plots de connexion permet d'homogénéiser les lignes de champ électrique et ainsi d'améliorer les performances de l'accumulateur électrique.

Selon une variante de réalisation, au moins un des premier 17a et second 17b plots de connexion comporte une zone de connexion plane en contact avec la partie 21 des particules électriquement conductrices 20. Par zone de connexion, on entend la zone du plot de connexion qui est en contact avec la partie 21 des particules 20. Cette zone permet ainsi d'assurer une connexion électrique entre ledit plot et un des collecteurs de courant de la micro-batterie additionnnelle 30. De préférence, chacun des deux plots de connexion, 17a et 17b, comporte également une zone de connexion plane. Une telle caractéristique structurelle permet, avantageusement, d'assurer un contact électrique performant et pérenne entre le premier 17a ou second 17b plot de connexion et la partie 21 des particules électriquement conductrices 20.

Selon un mode de réalisation particulier, un procédé de fabrication d'un accumulateur électrique tel que décrit ci-dessus, comporte la réalisation d'une micro-batterie 10 selon tout procédé connu. La micro-batterie 10 comporte un substrat 12, des premier 11 a et second 11 b collecteurs de courant, un empilement 13 et, avantageusement, des couches d'accroches 25.

Comme représenté à la figure 4, les premier 11 a et second 11 b collecteurs de courant sont formés sur une face d'un substrat 12, selon tout procédé connu, par exemple, par dépôt en couches minces tel qu'un dépôt physique en phase vapeur, noté PVD, un dépôt chimique en phase vapeur, noté CVD. Les premier 11 a et second 11 b collecteurs de courant sont structurés selon tout procédé connu, de préférence par photolithographie, de manière à être coplanaires et espacés l'un de l'autre. De préférence, les premier 11a et second 11 b collecteurs de courant sont en titane et ont une épaisseur d'environ 250 nm.

Un empilement 13 de couches minces solides, formant les parties électrochimiquement actives de la micro-batterie 10, est réalisé sur la face du substrat 12 comportant les premier 11 a et second 11 b collecteurs. L'empilement 13 comporte une première électrode 14, un électrolyte 15 et une deuxième électrode 16.

La première électrode 14 est formée de manière à recouvrir partiellement et uniquement un des premier 11 a ou second 11 b collecteurs de courant de la micro-batterie 10, par exemple, le premier collecteur 11a. La première électrode 14 est placée horizontalement entre une partie non recouverte du premier collecteur 11a et le second collecteur 11 b. La première électrode 14 est réalisée selon tout procédé connu, par exemple, par évaporation sous vide ou par pulvérisation cathodique. Elle peut être une cathode et le premier collecteur de courant 11 a un collecteur de courant cathodique. De préférence, la première électrode 14 a une épaisseur d'environ 1.5 µm.

L'électrolyte 15 est réalisé de manière à recouvrir une partie du collecteur de courant 11 a, une partie du second collecteur de courant 11 b, la totalité de la première électrode 14 et la partie libre du substrat 12 disposée entre les premier 11 a et second 11 b collecteurs de courant. L'électrolyte solide 15 est, par exemple, déposé par PVD et a une épaisseur d'environ 1,5 µm.

La seconde électrode 16 est réalisée de manière à recouvrir une majeure partie de l'électrolyte solide 15 pour former l'empilement 13, et être en contact avec le second collecteur de courant 11 b. La seconde électrode 16 peut être en lithium et formée par évaporation sous vide secondaire en chauffant le lithium métallique. La seconde électrode 16 a, de préférence, une épaisseur d'environ 3 µm.

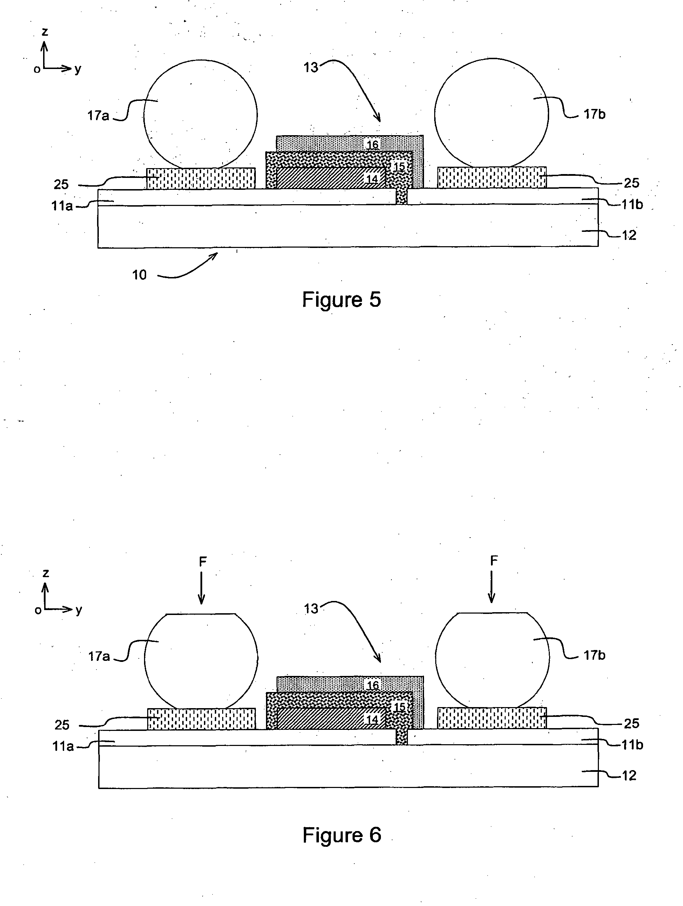

Comme représenté à la figure 5, une couche d'accroche 25 est, avantageusement, formée sur le premier 11 a ou le second 11 b collecteur de courant. De préférence, une couche d'accroche 25 est réalisée sur chacun des premier 11 a et second 11 b collecteurs de courant de la micro-batterie 10. Chaque couche d'accroche 25 est réalisée selon tout procédé connu, par exemple, par dépôt PVD ou par évaporation sous vide. Les couches d'accroche 25 ont, de préférence, une épaisseur comprise entre 250 nm et 1000 nm. Les couches d'accroche 25 sont disposés de manière à ce que l'empilement 13 soit placé horizontalement entre les deux couches d'accroche 25.

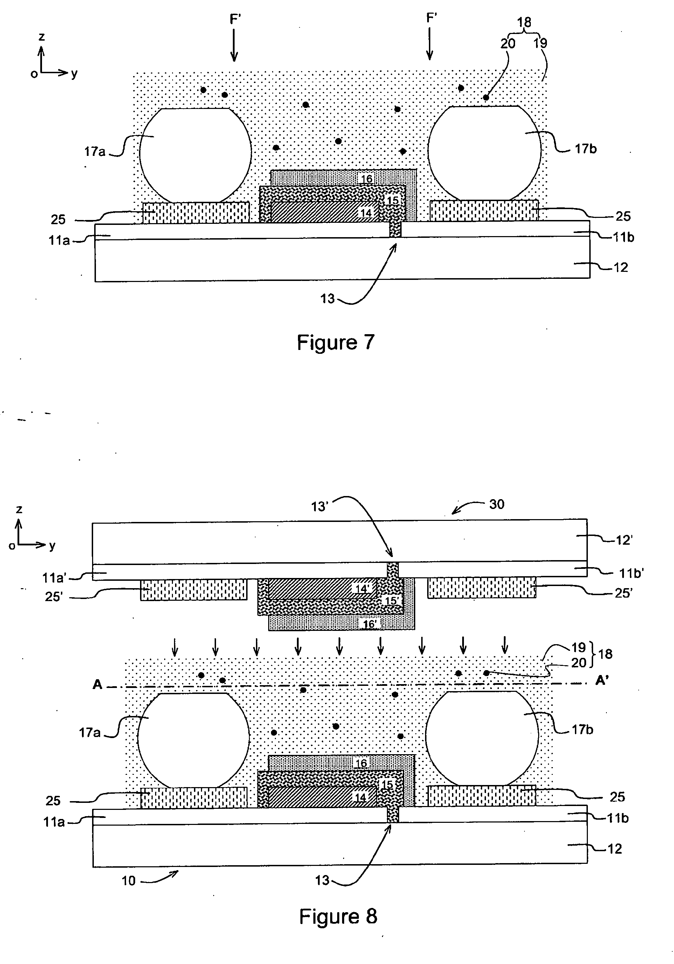

De manière analogue, une micro-batterie additionnelle 30 est réalisée selon tout procédé connu. La micro-batterie additionnelle 30 comporte des éléments semblables à ceux décrits pour la micro-batterie 10 et réalisés d'une manière analogue. Ainsi, la micro-batterie additionnelle 30 comporte des premier 11a' et second 11 b' collecteurs de courant, un empilement 13' et, avantageusement, des couches d'accroche 25', le tout sur une face d'un substrat 12'. L'empilement 13' constituant les parties électrochimiquement actives comporte une première électrode 14', un électrolyte 15' et une deuxième électrode 16' (figure 8).

Comme représenté à la figure 5, des premier 17a et second 17b plots de connexion sont réalisés sur l'une des deux micro-batteries 10 et 30, par exemple la micro-batterie 10. Les premier 17a et second 17b plots de connexion sont formés de manière à être électriquement connectés avec, respectivement, les premier 11 a et second 11b collecteurs de courant de la micro-batterie 10. Ils peuvent être réalisés soit directement sur les premier 11a et second 11 b collecteurs de courant de la micro-batterie 10, soit sur les couches d'accroche 25. Les plots de connexion sont, avantageusement, en aluminium ou en or.

Les premier 17a et second 17b plots de connexion peuvent être réalisés par une technique de micro-câblage (en anglais « wire bonding »). Avantageusement, les premier 17a et second 17b plots de connexion sont réalisés par une technique de micro-câblage ultrasonique (en anglais « wedge bonding »). Cette technique permet de réaliser une liaison entre le plot de connexion, par exemple 17a ou 17b, et la zone à connecter, par exemple l'une des couches d'accroche 25, en combinant pression et vibrations ultrasonores. La technique du « wedge bonding » peut être considérée comme une soudure « à froid ». En effet, c'est l'énergie ultrasonique qui entraîne un ramollissement du plot de connexion semblable à l'effet obtenu par une élévation de la température. C'est une technique de micro-câblage qui peut être effectuée à température ambiante. La technique du « wedge bonding » est compatible avec le procédé de réalisation des micro-batteries au lithium, qui a une température de fusion voisine de 180 °C.

Cette technique est préférée aux autres techniques de micro-câblage telles que la formation de billes pour micro-connexion (en anglais « ball bonding »), qui nécessite un maintien de la zone à connecter à une température plus élevée, comprise entre 160 °C et 200 °C. De plus, la technique de « wedge bonding » est une soudure à froid, ce qui permet d'éviter la formation de composés intermétalliques. Ainsi, on peut obtenir des connexions électriques adaptées à l'interconnexion de micro-batteries avec des résistances électriques comprises entre 0,1 et 1 Ohm.

Avantageusement, chaque plot de connexion 17a ou 17b a une forme d'un cylindre couché sur un plan parallèle à la face principale du substrat 12 pourvue des premier 11 a et second 11 b collecteurs de courant. Les premier 17a et second 17b plots de connexion cylindriques sont disposés de manière à entourer l'empilement 13. De ce fait, les premier 17a et second 17b plots de connexion forment une barrière de protection latérale pour les parties électrochimiquement actives de la micro-batterie 10. De plus, ils permettent d'obtenir une meilleure homogénéité des lignes de champ électrique dans la micro-batterie 10 grâce à la forme cylindrique et à une zone de contact plus importante entre les plots de connexion cylindriques et les couches d'accroche 25.

Comme représenté à la figure 6, le procédé de fabrication comporte ensuite une étape d'aplanissement par pressage du premier 17a ou second 17b plot de connexion. Cette étape d'aplanissement par pressage est, de préférence, réalisée sous une pression F comprise entre 100 MPa et 400 MPa. L'étape de pressage permet de former une zone de connexion plane sur chacun des premier 17a et second 17b plots de connexion et d'améliorer notamment la qualité de l'interface électrique.

Comme représenté à la figure 7, après la formation et optionnellement l'aplanissement par pressage des plots de connexion, on recouvre la micro-batterie 10 munie des premier 17a et second 17b plots de connexion par une couche hermétique 18, par exemple, une couche en matériau conducteur anisotrope ACF. La couche hermétique 18 est constituée par une matrice 19, électriquement isolante, en matériau polymère comprenant des particules électriquement conductrices 20. La couche hermétique 18 est disposée sur la micro-batterie 10 de manière à noyer les premier 17a et second 17b plots de connexion. De préférence, la matrice 19 est une matrice adhésive en polymère souple, généralement en polymère de type époxy/acrylate. La matrice 19 est électriquement isolante, de préférence, ayant une résistivité comprise entre 10⁸ et 10¹³ Ohm.cm. Par exemple, une ACF 3M 7371 peut être utilisée comme couche hermétique 18. Pour permettre à la couche hermétique 18 de mieux recouvrir et noyer les éléments de la micro-batterie 10 et les plots de connexion 17a et 17b, la couche hermétique 18 peut subir, un traitement thermique à une température de 90 °C pendant 1 s et/ou une pression F' comprise entre 1 et 15 kg/cm².

Comme représenté à la figure 8, la micro-batterie additionnelle 30, munie des premier 11 a' et second 11 b' collecteurs de courant, est disposée en regard de la première micro-batterie 10. Cette dernière est préalablement munie des premier 17a et second 17b plots de connexion et recouverte par la couche hermétique 18. Les premier 11a' et second 11 b' collecteurs de courant de la micro-batterie additionnelle 30 sont agencés de manière à ce qu'ils soient en regard respectivement des premier 17a et second 17b plots de connexion lorsque les deux micro-batteries 10 et 30 sont disposées en regard. Si la micro-batterie additionnelle 30 comporte des couches d'accroche 25' chaque couche d'accroche 25' est disposée en regard du premier 17a ou second 17b plot de connexion.

Avantageusement, les premier 11 a et second 11 b collecteurs de courant de la micro-batterie 10 sont réalisés de manière à être symétriques des premier 11a' et second 11 b' collecteurs de courant de la micro-batterie additionnelle 30, par rapport à un plan AA' parallèle au substrat 12. De préférence, les deux micro-batteries 10 et 30 sont symétriques par rapport à ce plan. Ces symétries permettent, avantageusement, un alignement facile et performant entre la micro-batterie 10 et la micro-batterie additionnelle 30, et facilitent l'étape d'encapsulation.

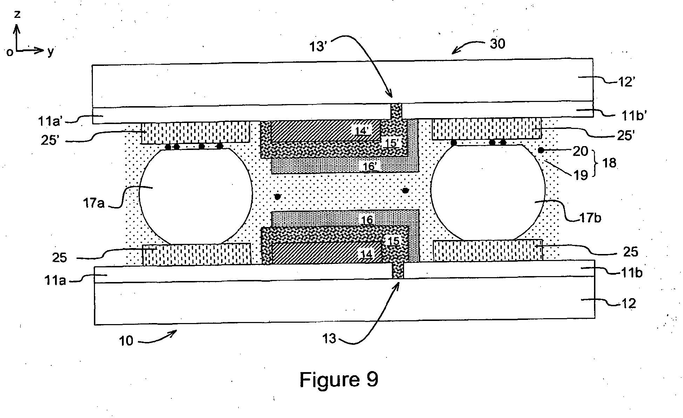

Comme représenté à la figure 9, la micro-batterie additionnelle 30, munie des premier 11a' et second 11b' collecteurs de courant, est ensuite pressée contre la micro-batterie 10. La disposition et le pressage peuvent être réalisés simultanément ou successivement. La réalisation de ces étapes permet également d'obtenir une connexion électrique des deux micro-batteries 10 et 30. Par connexion électrique entre les deux micro-batteries 10 et 30, on entend une connexion électrique entre les plots de connexion et les collecteurs de courant de la micro-batterie additionnelle 30. La pression est appliquée sur la micro-batterie 10 ou la micro-batterie additionnelle 30 de manière à les rapprocher. Lors de cette étape d'encapsulation, le pressage est réalisé jusqu'à obtenir une connexion électrique entre les premier 17a et/ou 17b plots de connexion et, respectivement, les premier 11 a' et second 11 b' collecteurs de courant. Cette connexion électrique est assurée par une partie 21 des particules électriquement conductrices 20 de la couche hermétique 18 et éventuellement les couches d'accroche 25' de la micro-batterie additionnelle 30. À titre d'exemple, pour une couche hermétique 18 électriquement isolante formée par l'ACF 3M 7371, la pression peut être comprise entre 10 et 20 kg/cm², de préférence autour de 15 kg/cm². Cette pression est choisie de manière à assurer la connexion électrique tout en évitant d'écraser les particules 20 de la couche hermétique 18. Lors de l'étape d'encapsulation de la micro-batterie 10, un traitement thermique est, avantageusement, réalisé de manière à porter la matrice 19 à une température inférieure à 180 °C, qui est une température proche de la température de fusion du lithium. De préférence, ce traitement thermique est réalisé à une température d'environ 140 °C pendant 20 s.

De préférence, les particules électriquement conductrices 20 de la couche hermétique 18 sont initialement sphériques avec un diamètre d. À titre d'exemple, elles sont constituées par des billes de verre couvertes d'argent. La concentration des particules 20 présentes dans la matrice 19 est choisie de manière à éviter toute percolation lors de l'étape d'encapsulation décrite ci-dessus. Ce phénomène de percolation des particules 20, peut générer un court-circuit entre les empilements, 13 et 13', ce qui est néfaste pour l'accumulateur électrique comportant la micro-batterie 10 et la micro-batterie additionnelle 30.

Pour éviter le phénomène de percolation, les particules 20 de la couche hermétique 18 ont, avantageusement, un diamètre d et une densité p répondant à la formule suivante : 0 < p < 1/d³, avant la connexion électrique. Cette caractéristique de la couche hermétique 18 permet d'assurer une isolation électrique suivant la direction (oy) parallèle au substrat 12 lors de l'assemblage des deux micro-batteries 10 et 30, et selon la direction (oz) dans les régions disposées entre les premier 17a et second 17b plots de connexion. De ce fait, les deux empilements 13 et 13' restent électriquement isolés après l'étape de pressage. De préférence, la densité p des particules électriquement conductrices 20 dans la matrice 19 répond à la formule suivante : 1/27*d³ < p < 1/8*d³, avant la connexion électrique. Cette gamme de densité p permet, avantageusement, d'améliorer la capacité de barrière à l'humidité. À titre d'exemple, un polymère ACF 3M 7371 constituant la matrice 19 présente une valeur de barrière à l'humidité de l'ordre de 10⁻¹ g/m²/jour. L'introduction, dans ce polymère, des particules de 10 µm de diamètre et avec une densité comprise entre 1/27*d³ et 1/8*d³ permet d'améliorer la valeur de la barrière à l'humidité jusqu'à deux ordres de grandeur.

Par ailleurs, le pressage des micro-batteries 10 et 30 entraîne une concentration des particules 20 au voisinage des reliefs les plus importants suivant (oz), i.e. entre les premier 17a et second 17b plots de connexion et les couches d'accroche 25' (figure 9). Un procédé de fabrication utilisant une telle étape d'encapsulation est particulièrement adapté à une topologie d'une micro-batterie ayant spécifiquement des plots de connexion formant des reliefs importants.

En effet, contrairement à une micro-batterie classique ayant une épaisseur de plots de connexion électrique inférieure à 1 µm, les premier 17a et second 17b plots de connexion ont des épaisseurs eₐ et e_{b} supérieures à l'épaisseur e₁₃ de la partie de l'empilement 13 en saillie. Les épaisseurs eₐ et e_{b} peuvent être comprises entre 6 et 150 µm, de préférence, égales à environ 25 µm. Les couches d'accroche 25 et les premier 17a et second 17b plots de connexion sont réalisés de manière à former des reliefs importants suivant l'axe (oz). Ainsi, une partie des particules 20 peut être concentrée entre les premier 17a et second 17b plots de connexion et les couches d'accroche 25' lors de l'étape de pressage en vue de l'encapsulation de la micro-batterie 10. Les épaisseurs eₐ et e_{b} sont également choisies de manière à éviter tout contact entre les empilements 13 et 13' lors de l'étape de pressage.

Comme représenté à la figure 9, la partie 21 des particules 20 piégées entre les plots de connexion et les couches d'accroche 25' permettent d'assurer une connexion électrique entre respectivement les premier 17a et second 17b plots de connexion et les premier 11 a' et second 11 b' collecteurs de courant de la micro-batterie additionnelle 30. Afin de faciliter un tel piégeage de la partie 21 des particules 20, le diamètre d des particules électriquement conductrices 20, initialement sphériques, est inférieur à la plus petite dimension des premier 17a et second 17b plots de connexion. Ainsi, la micro-batterie 10 et la micro-batterie additionnelle 30 sont électriquement connectées par l'intermédiaire des premier 17a et second 17b plots de connexion et de la partie 21 des particules 20.

Le procédé de fabrication de l'accumulateur électrique selon l'invention permet de réaliser une encapsulation performante de la micro-batterie 10 et de la micro-batterie additionnelle 30. En effet, chaque micro-batterie protège l'autre grâce aux substrats 12 et 12' qui constituent des barrières épaisses et donc efficaces au-dessus et au-dessous des empilements 13 et 13'. De plus, les premier 17a et second 17b plots de connexion et la couche hermétique 18 constituent un bouclier latéral efficace, protégeant l'accumulateur électrique sur les flancs. Ainsi, il a été possible d'obtenir des valeurs de barrière à l'humidité inférieures à 10⁻³ g/m²/jour, compatibles avec les exigences de la technologie des micro-batteries.

Le procédé de fabrication décrit ci-dessus est également remarquable en ce qu'il est facile à réaliser et permet d'effectuer une encapsulation active de deux micro-batteries à la fois. Le procédé de fabrication selon l'invention permet, avantageusement, de connecter électriquement les deux micro-batteries entre elles à l'aide de plots de connexion, qui assurent également une protection latérale des deux micro-batteries. De plus, ces plots de connexion peuvent comporter une zone plane permettant ainsi un assemblage et une encapsulation facile, performant et pérenne des deux micro-batteries.

## Revendications

1. Accumulateur électrique comportant :
- une micro-batterie (10) munie de premier (11a) et second (11b) collecteurs de courant ; et
- des moyens d'encapsulation comportant une couche hermétique (18), électriquement isolante, constituée par une matrice (19) en matériau polymère comprenant des particules électriquement conductrices (20) ;
**caractérisé en ce que** :
- des premier (17a) et second (17b) plots de connexion en matériau électriquement conducteur sont respectivement connectés électriquement aux premier (11a) et second (11b) collecteurs de courant de la micro-batterie (10) ;
- les moyens d'encapsulation comportent une micro-batterie additionnelle (30) munie de premier (11a') et second (11b') collecteurs de courant, disposée en regard et séparée de la micro-batterie (10) par la couche hermétique (18) ;
- les premier (11a') et/ou second (11b') collecteurs de courant de la micro-batterie additionnelle (30) sont électriquement connectés, respectivement, aux premier (17a) et/ou second (17b) plots de connexion via au moins une partie (21) des particules électriquement conductrices (20).

2. Accumulateur électrique selon la revendication 1, **caractérisé en ce qu'**il comporte une couche d'accroche (25) interposée entre le premier (17a) ou second (17b) plot de connexion et respectivement le premier (11a) ou second (11b) collecteur de courant de la micro-batterie (10).

3. Accumulateur électrique selon l'une des revendications 1 et 2, **caractérisé en ce que** la micro-batterie (10) comporte un empilement (13) constitué par des première (14) et seconde (16) électrodes séparées par un électrolyte (15) et **en ce que** les premier (17a) et second (17b) plots de connexion délimitent latéralement l'empilement (13).

4. Accumulateur électrique selon l'une quelconque des revendications 1 à 3, **caractérisé en ce que** les premier (11a) et second (11b) collecteurs de courant de la micro-batterie (10) sont symétriques des premier (11a') et second (11b') collecteurs de courant de la micro-batterie additionnelle (30) par rapport à un plan de symétrie AA' disposé entre la micro-batterie 10 et la micro-batterie additionnelle 30.

5. Accumulateur électrique selon l'une quelconque des revendications 1 à 4, **caractérisé en ce qu'**au moins un des premier (17a) et second (17b) plots de connexion comporte une zone de connexion plane en contact avec la partie (21) des particules électriquement conductrices (20).

6. Accumulateur électrique selon la revendication 3, **caractérisé en ce que** les épaisseurs (eₐ , e_{b}) des premier (17a) et second (17b) plots de connexion sont au moins supérieures à deux fois l'épaisseur (e₁₃) de l'empilement (13).

7. Accumulateur électrique selon l'une quelconque des revendications 1 à 6, **caractérisé en ce que** les premiers collecteurs de courant (11a, 11a'), respectivement, de la micro-batterie (10) et de la micro-batterie additionnelle (30) sont de même polarité.

8. Accumulateur électrique selon l'une quelconque des revendications 1 à 6, **caractérisé en ce que** les premiers collecteurs de courant (11a et 11a'), respectivement de la micro-batterie (10) et de la micro-batterie additionnelle (30) sont de polarités différentes.

9. Procédé de fabrication d'un accumulateur électrique **caractérisé en ce qu'**il comporte une étape d'encapsulation d'une micro-batterie (10) munie de premier (11a) et second (11b) collecteurs de courant, en disposant en regard et en pressant une micro-batterie additionnelle (30) munie de premier (11a') et second (11b') collecteurs de courant avec la micro-batterie (10) préalablement munie de premier (17a) et second (17b) plots de connexion et recouverte par une couche hermétique (18), électriquement isolante, constituée par une matrice (19) en matériau polymère comprenant des particules électriquement conductrices (20), jusqu'à obtenir la connexion électrique entre les premier (17a) et/ou second (17b) plots de connexion et respectivement les premier (11a') et/ou second (11b') collecteurs de courant de la micro-batterie additionnelle (30) via une partie (21) des particules électriquement conductrices (20).

10. Procédé selon la revendication 9, **caractérisé en ce que** les premier (17a) et second (17b) plots de connexion sont réalisés par une technique de micro-câblage ultrasonique.

11. Procédé selon l'une des revendications 9 et 10, **caractérisé en ce qu'**il comporte une étape d'aplanissement par pressage du premier (17a) ou second (17b) plot de connexion avant de recouvrir la micro-batterie (10) munie des premier (17a) et second (17b) plots de connexion par la couche hermétique (18) électriquement isolante.

12. Procédé selon la revendication 11, **caractérisé en ce que** l'étape d'aplanissement par pressage est réalisée sous une pression comprise entre 100 MPa et 400 MPa.

13. Procédé selon l'une quelconque des revendications 9 à 12, **caractérisé en ce que** lors de l'étape d'encapsulation, la matrice (19) est portée à une température inférieure à 180 °C.

14. Procédé selon l'une quelconque des revendications 9 à 13, **caractérisé en ce qu'**avant la connexion électrique, les particules (20) de la couche hermétique (18) électriquement isolante, ont un diamètre d et une densité p répondant à la formule suivante : 0 < p < 1/d³.

15. Procédé selon l'une quelconque des revendications 9 à 14, **caractérisé en ce qu'**avant la connexion électrique, la densité p des particules (20) électriquement conductrices dans la matrice (19) répond à la formule suivante : 1/(27*d³) < p < 1/(8*d³).

16. Procédé selon l'une quelconque des revendications 9 à 15, **caractérisé en ce que** les particules (20) de la couche hermétique (18) électriquement isolante ont un diamètre d inférieure à la plus petite dimension des premier (17a) et second (17b) plots de connexion.

## Patentansprüche

1. Elektrischer Akkumulator, umfassend:
- eine Mikrobatterie (10), die mit einem ersten (11a) und einem zweiten (11b) Stromkollektor ausgestattet ist; und
- Kapselungsmittel, die eine elektrisch isolierende, hermetische Schicht (18) umfassen, welche durch eine Matrix (19) aus Polymermaterial mit elektrisch leitenden Partikeln (20) gebildet ist;
**dadurch gekennzeichnet, dass**:
- eine erste (17a) und eine zweite (17b) Anschlussstelle aus elektrisch leitendem Material mit dem ersten (11a) bzw. dem zweiten (11b) Stromkollektor der Mikrobatterie (10) elektrisch verbunden sind;
- die Kapselungsmittel eine mit einem ersten (11a') und einem zweiten (11b') Stromkollektor ausgestattete zusätzliche Mikrobatterie (30) umfassen, die gegenüber der Mikrobatterie (10) angeordnet und durch die hermetische Schicht (18) von dieser getrennt ist;
- der erste (11a') und/oder der zweite (11b') Stromkollektor der zusätzlichen Mikrobatterie (30) über wenigstens einen Teil (21) der elektrisch leitenden Partikel (20) respektive mit der ersten (17a) und/oder der zweiten (17b) Anschlussstelle elektrisch verbunden sind.

2. Elektrischer Akkumulator nach Anspruch 1, **dadurch gekenntzeichnet,** dass er eine Haftschicht (25) umfasst, die zwischen der ersten (17a) oder zweiten (17b) Anschlussstelle und respektive dem ersten (11a) oder zweiten (11b) Stromkollektor der Mikrobatterie (10) eingefügt ist.

3. Elektrischer Akkumulator nach einem der Ansprüche 1 und 2, **dadurch gekennzeichnet, dass** die Mikrobatterie (10) einen Stapel (13) umfasst, der durch eine erste (14) und eine zweite (16) Elektrode, welche durch einen Elektrolyt (15) getrennt sind, gebildet ist, und dass die erste (17a) und die zweite (17b) Anschlussstelle den Stapel (13) seitlich begrenzen.

4. Elektrischer Akkumulator nach einem der Ansprüche 1 bis 3, **dadurch gekennzeichet**, dass der erste (11a) und der zweite (11b) Stromkollektor der Mikrobatterie (10) in Bezug auf eine zwischen der Mikrobatterie (10) und der zusätzlichen Mikrobatterie (30) angeordnete Symmetrieebene (AA') zu dem ersten (11a') und dem zweiten (11b') Stromkollektor der zusätzlichen Mikrobatterie (30) symmetrisch sind.

5. Elektrischer Akkumulator nach einem der Ansprüche 1 bis 4, **dadurch gekennzeichet**, dass wenigstens einer der ersten (17a) und zweiten (17b) Anschlussstellen einen mit dem Teil (21) der elektrisch leitenden Partikel (20) in Kontakt befindlichen ebenen Anschlussbereich umfasst.

6. Elektrischer Akkumulator nach Anspruch 3, **dadurch gekennzeichnet, dass** die Dicken (eₐ, e_{b}) der ersten (17a) und der zweiten (17b) Anschlussstelle wenigstens zweimal größer als die Dicke (e₁₃) des Stapels (13) sind.

7. Elektrischer Akkumulator nach einem der Ansprüche 1 bis 6, **dadurch gekennzeichnet, dass** die ersten Stromkollektoren (11a, 11a') der Mikrobatterie (10) bzw. der zusätzlichen Mikrobatterie (30) die gleiche Polarität aufweisen.

8. Elektrischer Akkumulator nach einem der Ansprüche 1 bis 6, **dadurch gekennzeichnet, dass** die ersten Stromkollektoren (11a und 11a') der Mikrobatterie (10) bzw. der zusätzlichen Mikrobatterie (30) unterschiedliche Polaritäten aufweisen.

9. Verfahren zur Herstellung eines elektrischen Akkumulators, **dadurch gekennzeichnet, dass** es einen Schritt zur Kapselung einer Mikrobatterie (10), die mit einem ersten (11a) und einem zweiten (11b) Stromkollektor ausgestattet ist, dadurch umfasst, dass eine zusätzliche Mikrobatterie (30), die mit einem ersten (11a') and einem zweiten (11b') Stromkollektor ausgestattet ist, gegenüber der Mikrobatterie (10), welche zuvor mit einer ersten (17a) und einer zweiten (17b) Anschlussstelle versehen und mit einer elektrisch isolierenden, hermetischen Schicht (18), bestehend aus einer Matrix (19) aus Polymermaterial mit elektrisch leitenden Partikeln (20), überzogen wird, angeordnet und mit dieser zusammengedrückt wird, bis die elektrische Verbindung zwischen der ersten (17a) und/oder der zweiten (17b) Anschlussstelle und respektive dem ersten (11a') und/oder dem zweiten (11b') Stromkollektor der zusätzlichen Mikrobatterie (30) über einen Teil (21) der elektrisch leitenden Partikel (20) erreicht ist.

10. Verfahren nach Anspruch 9, **dadurch gekennzeichnet, dass** die erste (17a) und die zweite (17b) Anschlussstelle durch eine Ultraschallmikroverdrahtungstechnik ausgebildet sind.

11. Verfahren nach einem der Ansprüche 9 und 10, **dadurch gekennzeichnet, dass** es einen Schritt zum Einebnen durch Pressen der ersten (17a) oder zweiten (17b) Anschlussstelle umfasst, bevor die mit der ersten (17a) und der zweiten (17b) Anschlussstelle ausgestattete Mikrobatterie (10) mit der elektrisch isolierenden, hermetischen Schicht (18) überzogen wird.

12. Verfahren nach Anspruch 11, **dadurch gekennzeichnet, dass** der Schritt des Einebnens durch Pressen unter einem Druck im Bereich zwischen 100 MPa und 400 MPa durchgeführt wird.

13. Verfahren nach einem der Ansprüche 9 bis 12, **dadurch gekennzeichnet, dass** während des Kapselungsschrittes die Matrix (19) auf eine Temperatur von weniger als 180 °C erhitzt wird.

14. Verfahren nach einem der Ansprüche 9 bis 13, **dadurch gekennzeichnet, dass** vor dem elektrischen Verbinden die Partikel (20) der elektrisch isolierenden, hermetischen Schicht (18) einen Durchmesser d und eine Dichte p aufweisen, die die folgende Formel erfüllen: 0 < ρ < 1/d³.

15. Verfahren nach einem der Ansprüche 9 bis 14, **dadurch gekennzeichnet, dass** vor dem elektrischen Verbinden die Dichte p der elektrisch leitenden Partikel (20) in der Matrix (19) die folgende Formel erfüllt: 1/(27*d³) < ρ < 1/(8*d³).

16. Verfahren nach einem der Ansprüche 9 bis 15, **dadurch gekennzeichnet, dass** die Partikel (20) der elektrisch isolierenden, hermetischen Schicht (18) einen Durchmesser d aufweisen, der geringer als die kleinste Abmessung der ersten (17a) und der zweiten (17b) Anschlussstelle ist.

## Claims

1. Electric battery comprising:
- a microbattery (10) provided with first (11 a) and second (11b) current collectors; and
- encapsulation means comprising a sealing layer (18), electrically insulating and formed by a polymer material matrix (19) comprising electrically-conductive particles (20);
**characterized in that**:
- first (17a) and second (17b) connection pads made of electrically-conductive material are respectively electrically connected to the first (11 a) and second (11 b) current collectors of the microbattery (10);
- the encapsulation means comprise an additional microbattery (30) provided with first (11a') and second (11b') current collectors, arranged opposite to and separate from the microbattery (10) by the sealing layer (18);
- the first (11a') and/or second (11 b') current collectors of the additional microbattery (30) are electrically connected, respectively, to the first (17a) and/or second (17b) connection pads via at least a portion (21) of the electrically-conductive particles (20).

2. Electric battery according to claim 1, **characterized in that** it comprises a bonding layer (25) interposed between the first (17a) or second (17b) connection pad and respectively the first (11a) or second (11b) current collector of the microbattery (10).

3. Electric battery according to any of claims 1 and 2, **characterized in that** the microbattery (10) comprises a stack (13) formed by first (14) and second (16) electrodes separated by an electrolyte (15) and **in that** the first (17a) and second (17b) connection pads laterally delimit the stack (13).

4. Electric battery according to any of claims 1 to 3, **characterized in that** the first (11a) and second (11b) current collectors of the microbattery (10) are symmetrical to the first (11a') and second (11b') current collectors of the additional microbattery (30) with respect to a plane of symmetry AA' arranged between microbattery (10) and additional microbattery (30).

5. Electric battery according to any of claims 1 to 4, **characterized in that** at least one of first (17a) and second (17b) connection pads comprises a planar connection area in contact with the portion (21) of the electrically-conductive particles (20).

6. Electric battery according to claim 3, **characterized in that** the thicknesses (eₐ, e_{b}) of the first (17a) and second (17b) connection pads are at least greater than twice the thickness (e₁₃) of the stack (13).

7. Electric battery according to any of claims 1 to 6, **characterized in that** the first current collectors (11a, 11a'), respectively, of the microbattery (10) and of the additional microbattery (30) have the same biasing.

8. Electric battery according to any of claims 1 to 6, **characterized in that** the first current collectors (11a and 11a'), respectively of the microbattery (10) and of the additional microbattery (30) have different biasings.

9. Method of manufacturing an electric battery **characterized in that** it comprises a step of encapsulating a microbattery (10) provided with first (11a) and second (11b) current collectors by arranging opposite thereto and by pressing an additional microbattery (30) provided with first (11a') and second (11b') current collectors with the microbattery (10) previously provided with first (17a) and second (17b) connection pads and covered with an electrically-insulating and sealing layer (18), formed by a matrix (19) made of polymer material comprising electrically-conductive particles (20), to obtain an electric connection between the first (17a) and/or second (17b) connection pads and respectively the first (11a') and/or second (11b') current collectors of the additional microbattery (30) via a portion (21) of the electrically-conductive particles (20).

10. Method according to claim 9, **characterized in that** the first (17a) and second (17b) connection pads are formed by an ultrasonic wedge bonding technique.

11. Method according to any of claims 9 and 10, **characterized in that** it comprises a step of leveling by pressing the first (17a) or second (17b) connection pads before covering the microbattery (10) provided with the first (17a) and second (17b) connection pads by the electrically-insulating and sealing layer (18).

12. Method according to claim 11, **characterized in that** the pressure leveling step is performed under a pressure in the range from 100 MPa to 400 MPa.

13. Method according to any of claims 9 to 12, **characterized in that** during the encapsulation step, the matrix (19) is taken to a temperature lower than 180°C.

14. Method according to any of claims 9 to 13, **characterized in that** before the electric connection, the particles (20) of the electrically-insulating and sealing layer (18) have a diameter d and a density ρ according to the following formula: 0 < ρ < 1/d³.

15. Method according to any of claims 9 to 14, **characterized in that** before the electric connection, density p of the electrically-conductive particles (20) in the matrix (19) follows formula: 1/(27*d³) < ρ < 1/(8*d³).

16. Method according to any of claims 9 to 15, **characterized in that** the particles (20) of the electrically-insulating and sealing layer (18) have a diameter d smaller than the smallest dimension of the first (17a) and second (17b) connection pads.
